## Europäisches Patentamt
## European Patent Office
## Office européen des brevets

(19)

(11) Veröffentlichungsnummer: **0 189 502**
**B1**

(12)

# EUROPÄISCHE PATENTSCHRIFT

(45) Veröffentlichungstag der Patentschrift:
**13.01.88**

(21) Anmeldenummer: **85101059.5**

(22) Anmeldetag: **01.02.85**

(51) Int. Cl.⁴: **G 11 B 3/095,** G 11 B 25/04

(54) **Tonwiedergabegerät für ruhende platten- oder blattförmige Tonträger.**

(43) Veröffentlichungstag der Anmeldung:
**06.08.86 Patentblatt 86/32**

(45) Bekanntmachung des Hinweises auf die Patenterteilung:
**13.01.88 Patentblatt 88/2**

(84) Benannte Vertragsstaaten:
**AT CH DE FR GB LI NL**

(56) Entgegenhaltungen:
**CH-A-404 230**
**DE-A-2 430 376**
**DE-B-1 136 505**
**DE-B-1 184 980**
**DE-B-1 232 363**
**FR-A-984 323**
**FR-A-1 131 823**
**FR-A-2 328 257**
**FR-A-2 406 866**
**GB-A-1 177 353**
**US-A-3 896 491**

(73) Patentinhaber: **Döring, Erich, Dr., Im Hölzeli, CH-9442 Berneck (CH)**

(72) Erfinder: **Döring, Erich, Dr., Im Hölzeli, CH- 9442 Berneck (CH)**

(74) Vertreter: **Behrens, Dieter, Dr.- Ing., Patentanwälte WUESTHOFF- V. PECHMANN- BEHRENS- GOETZ Schweigerstrasse 2, D-8000 München 90 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

## Beschreibung

Die Erfindung betrifft ein elektrisch betriebenes Tonwiedergabegerät für ruhende platten- oder blattförmige Tonträger mit einer spiralförmigen Tonrille sowie mit Justiermitteln zum lagegerechten Aufsetzen und auf einen solchen Tonträger. Der um eine senkrechte Achse umlaufende, von einem batteriegespeisten Antriebsmotor antreibbare Tonarmteller des Tonwiedergabegeräts nimmt eine horizontal und vertikal schwenkbar gelagerte Tonabnahmeeinrichtung (Tonarm mit Tonabnehmersystem) auf, die mit dem Einschalten des Geräts mittels einer Absenkeinrichtung aus einer eingezogenen Lage heraus auf den Tonträger in dessen Tonrille abgesetzt wird. Zur selbsttätigen Rückführung der Tonabnahmeeinrichtung in die Ausgansstellung nach einer Abschaltung läuft diese gegen eine Anschlagkurvenscheibe an und wird zu ihrer Spitze gedrängt.

Beim Unterricht und insbesondere beim Selbstunterricht ist es häufig erwünscht oder sogar erforderlich, bildlich oder fremdsprachlich Dargestelltes und Geschriebenes durch eine akustische Information zu ergänzen oder fremsprachliche Texte vorzusprechen, um sie zu vertiefen und die richtige Ausprache zu lehren. Zu diesem Zweck ist es z. B. üblich, Büchern für den Selbstunterricht bespielte Schallplatten oder Tonbänder beizugeben, die vom Benutzer nach einem vorgeschriebenen, am Inhalt des Buches ausgerichteten Plan oder bei Bedarf abgespielt werden sollen. Die relativ komplizierte Handhabung von losen Schallplatten und Bändern mit einer Spieldauer von 10 bis 30 Minuten und insbesondere das mit dem fortschreitenden Durcharbeiten eines Buches koordinierte Abspielen dieser Tonträger wird zumindest als unbequem empfunden und führt dazu, daß der vorgesehene Plan zu deren Benutzung nicht eingehalten wird.

Daher ist es bekannt, die Tonträger ruhend zu belassen und mit einem kleinen Tonwiedergabegerät abzuspielen, das eine umlaufende Tonabnahmeeinrichtung aufweist, mit der eine spiralförmige Tonrille des Tonträgers abgespielt wird. Ein solcher Tonträger kann fest mit den Seiten eines Buchs verbunden sein. Die Verbindung mit dem Buch erfolgt zweckmäßigerweise bereits bei der Herstellung des Buchs, wenn es nicht dem Käufer des Buchs, der zu diesem die Tonträger gesondert kauft, überlassen bleibt. Ein solcher Tonträger kann beispielsweise eine runde oder eine quadratische Form mit abgerundetem Oberteil (DE-GM-7 421 436) oder Fahrkartenform (DE-C-2 836 303) aufweisen. Er kann aber auch auf in die Karternen von in Büchern einzübindenden Kunststoff-Folienseiten vorgesehen sein (DE-C-3 133 187).

Tonwiedergabegräte der eingangs genannten Art für solche ruhenden platten- oder blattförmigen Tonträger mit 4 bis 6 cm Durchmesser sind in verschiedenen Ausführungsformen bekannt (DE-C-1 301 150, US-A-3 193 295, DE-A-2 430 376, DE-A-2 430 377, DE-A-2 155 910). Aus der DE-A-2 430 376 ist ein gattungsgemäßes Tonwiedergabegerät bekannt, bei dem eine Kurvenscheibe zur selbsttätigen Rückführung der Tonabnahmeeinrichtung (Tonarm) in die Ausgangsstellung nach einer Abschaltung vorgesehen ist. Die umlaufende Tonabnahmeeinrichtung läuft zunächst gegen die Anschlagkurvenscheibe an und wird bis zu ihrer Spitze gedrängt, so daß sie beim erneuten Anlaufen wieder in der Einlaufrille abzutasten beginnt. Es ist auch ein in der Hand zu betreibendes Tonwiedergabegerät bekannt (DE-PS-2 836 303), in das ganz kleine Karten von der Größe von Fahrkarten (3 cm x 6 cm) mit aufgeklebten Tonträgern zur wiedergabe eingeschoben werden.

Schließlich ist es bei einem automatischen Plattenspieler mit Drehteller für die Aufnahme der Schallplatte bekannt, eine Vorwahleinrichtung vorzusehen, um einen willkürlich vorwählbaren Teil der Schallplatte wiederholt abzuhören (CH-A-404 230). Dazu ist ein die radiale Schwenkbewegung des Tonkopfes beim Aufsetzen begrenzender, sich selbsttätig zurückziehender, nockengesteuerter, von einem Vorwähler einstellbarer Anschlaghebel vorgesehen.

Für die hier angesprochenen Tonwiedergabegeräte werden Tonträger verwendet, die eine Spieldauer von etwa 1 bis 4 min haben und deren äußere Tonrille 2 bis 4 cm Durchmesser haben.

Speziell bei Sprachlehr-Tonträgern ist es oftmals erwünscht, daß man nicht den ganzen Text, der auf dem Tonträger vorgesprochen ist, wiederholt sondern nur einen speziellen Teil nochmals gehört wird.

Mit den bekannten Tonwiedergabegeräten und Tonträgern kann aber eine Selektierung des Textes nicht erreicht werden. Es ist nicht möglich, nur ein Textmittelstück oder einen anderen Teil des Textes zu hören, ohne den unerwünschten vorangegangenen Text mit anzuhören. Es kann nämlich die Tonabnahmeeinrichtung nicht von Hand versetzt werden, wie dies bei einem üblichen Plattenspieler meist möglich ist, bei denen der Tonarm von Hand zu einer bestimmten Rille bzw. zwischen voneinander, meist durch Leerrillen abgegrenzte Bereiche der Tonrille geführt werden kann. Bei Langspielplatten mit mehreren Musiktiteln ist es üblich, die Bereiche dadurch voneinander zu trennen, daß die an sich durchgehende Tonrille einige Leerrillen mit merklich größerer als üblicher Steigung hat, so daß dieser Zwischenbereich erkennbar und in ihn der Tonabnehmer aufsetzbar, beim Abspielen aber auch schnell durchlaufbar ist.

Der Umstand, daß mit dem eingangs genannten Tonwiedergabegerät eine Selektierung des Textes nicht möglich ist, mindert den wert derartiger Tonwiedergabegeräte und zugehöriger Tonträger für Lernzwecke, insbesondere Sprachstudien.

Der Erfindung liegt die Aufgabe zugrunde, ein Tonwiedergabesystem aus eingangs genanntem Tonwiedergabegerät mit zugehörigem Tonträger dahingehend fortzuentwickeln, daß auch auf bestimmte Bereiche zwischen Ein- und Auslaufrille bzw. zwischen Anfang und Ende des Spielbereichs der Tonrille des Tonträgers zugegriffen werden kann.

Zur Lösung dieser Aufgabe sieht die Erfindung bei dem eingangs genannten Tonwiedergabegerät vor, daß um die wiedergabe an einer bestimmten Stelle zu beginnen, die Anschlagkurvenscheibe in den Bewegungsbereich der Tonabnahmeeinrichtung schwenkbar und mittels eines von einer Außenseite des Gehäuses des Tonwiedergabegeräts verstellbaren Einstellteils in verschiedene radiale Stellungen, bezogen auf die Tonarmtellerachse derart bringbar ist, daß nach Anlaufen der umlaufenden Tonabnahmeeinrichtung gegen die Anschlagkurvenscheibe diese nach innen zu ihrer Spitze gedrängt wird, über die sie dann bei Erreichen de gewünschten Stelle der Tonrille hinweggleitet.

Zweckmäßigerweise ist zwischen dem Einstellteil und der schwenkbaren Anschlagkurvenscheibe ein Untersetzungsgetriebe vorgesehen, um möglichst genau die gewünschte (radiale) Stelle der Tonrille zu erreichen. Das Einstellteil ist besonders gut einstellbar, wenn es als Drehknopf ausgebildet ist. Dabei ist es von Vorteil, wenn das Einstellteil oder das Untersetzungsgetriebe mit einer Rasteinrichtung, insbes. Rastscheibe, zusammenwirkt, die reproduzierbar winkelstellungen der Anschlagkurvenscheibe bestimmt Wirkt der Einstellknopf mit einer Skala zusammen, die den Rastungen entsprechende Marken hat, so läßt sich leicht eine reproduzierbare Zuordnung der radialen Stellung der Ablaufspitze der Anschlagkurvenscheibe erhalten, so daß der tonillustrierte Text bereits mit Einstellungshinweisen versehen werden kann, um bestimmte Stellen des Tonträgers unmittelbar anzusteuern.

Durch Verschwenken der Anschlagkurvenscheibe (Tonabnahmeeinrichtungs-Leitkurve) kann nach dem Einschalten des Tonwiedergabegeräts das Tonabnahmersystem bzw. dessen Nadel nicht im äußeren Bereich der spiralförmigen Tonrille aufgesetzt werden sondern wird zunächst bei von außen nach innen abgetasteten Tonrillen auf eine radial weiter innen liegende Stelle gedrängt, bevor es zum Abspielen freigegeben wird. Freigegeben ist die Tonabnahmeeinrichtung dann, wenn sie unbeeinflußt von der Anschlagkurvenscheibe die Tonrillen abtasten kann. Es ist denkbar, daß das Tonabnahmersystem bereits im Bereich der Einlaufrille auf den Tonträger abgesenkt ist und dann erst an die Anschlagkurvenscheibe anläuft. Sie wird durch diese relativ schnell radial nach innen gedrängt und dabei über die äußeren Tonrillen hinweggeführt. Bei der geringen Masse der Tonabnahmeeinrichtung ist dies, insbes. bei im Durchmesser kleinen Tonrillen, nicht nachteilig. Zur Vermeidung eines Kratzgeräusches kann der Wiedergabeverstärker zunächst automatisch kurz stummgeschaltet werden. Der Prozeß des Einschwenkens des Tonarms auf die gesuchte Tonrille dauert im allgemeinen weniger als 1 sec., weshalb eine Stummschaltung auch nur entsprechend kurz zu sein braucht.

Die Anschlagkurvenscheibe kann unmittelbar in den Bewegungsbereich des Tonabnahmersystems schwenkbar sein und dieses unmittelbar zur Anlage mit der Anschlagkurvenscheibe kommen. Diese Ausführungsform ist dann möglich, wenn das Tonabnahmersystem beispielsweise zylindrisch ist und oberhalb der Abtastnadel eine Anschlagmöglichkeit besteht. Wenn dies unerwünscht oder unmöglich ist, kann die Anschlagkurvenscheibe auch in den Bewegungsbereich eines Anschlags des Tonarms schwenkbar sein und dieser Anschlag unmittelbar zur Anlage mit der Anschlagkurvenscheibe kommen. Ein solcher Anschlag kann die Form eines neben dem Tonabnehmbersystem befindlichen Stifts oder aus dem Tonarm ausgeformten Lappens haben.

Sofern es erwünscht ist, daß bis zum Erreichen der gewünschten Tönrillensteile die Abtastnadel des Tonabnehmersystems nicht quer über die ersten Tonrillen hinwegkratzt, muß die Abtastnadel beim Hinführen des Tonarms an die erwünschte Stelle der Tonrille von dem Tonträger abgehoben gehalten werden. Dies ist in einfacher weise dann möglich, wenn die Anschlagkante der Anschlagkurvenscheibe nach oben abgeschrägt ist und das Tonabnehmersystem oder der Anschlag des Tonarms an der Schrägfläche zum Abheben der Tonabnehmereinrichtung vom Tonträger hochläuft. Die Abtastnadel muß nur einen Bruchteil eines Millimeters angehoben werden. Zur Unterstützung des Abhebens kann nicht nur die Anschlagkante der Anschlagkurvenscheibe abgeschrägt sein sondern auch die Anschlagfläche des Tonabnehmersystems oder des Anschlags des Tonarms eine gleichsinnige Abschrägung haben.

Die Anschlagkurvenscheibe kann unterhalb, d.h. zwischen Tonarmteller und Tonträger, oder auch oberhalb des Tonarmtellers in den Bewegungsbereich der Tonerabnehmereinrichtung eingeschwenkt werden, je nachdem wo sich die Anschlagkurvenscheibe im Gehäuse des Tonwiedergabegeräts konstruktiv am besten unterbringen läßt und wo ein Zusammenwirken mit der Tonabnehmereinrichtung gut möglich ist. So kann auf der Oberseite des Tonarmtellers beispielsweise der Anschlag des Tonarms vorstehen, oder die Anschlagkurvenscheibe kommt unterhalb des Tonarmtellers unmitelbar mit dem Gehäuse des Tonabnahmersystems in Berührung und drängt es auf diese Weise zur gewünschten Stelle der Tonrille.

An sich ist es nicht erforderlich, daß die spiralförmige Tonrille des Tonträgers in mehrere Abschnitte durch die Formgebung der Tonrille unterteilt ist. Dennoch ist ein Tonträger mit spiralförmiger Tonrille besonders vorteilhaft, bei dem die Tonrille radial in mehrere Tonbereiche unterteilt ist, zwischen denen die Tonrille größere Steigung als in den Tonbereichen hat. Die Zwischenbereiche der Tonrille größerer Steigung können zwei Leerrillen sein, wie dies von Langspielplatten von mehreren Stücken an sich bekannt ist. Die Leerrillen lassen sich über die Anschlagkurvenscheiben leicht hinreichend genau ansteuern, so daß genau ab der gewünschten Stelle der Tonrille der Abspielvorgang begonnen wird.

Bei Tonwiedergabegeräten, bei denen die Tonabnahme von Zentrum nach außen erfolgt, wird die Anschlagkurvenscheibe derart im Gehäuse des Tonwiedergabegeräts angebracht, daß der Tonarm zwangsweise vom Zentrum nach außen auf die gewünschte Textstelle geleitet wird.

Ein Ausführungsbeispiel der Erfindung ist anhand einer Zeichnung näher erläutert, in der zeigt:

Fig. 1 eine Schrägansicht eines Tonwiedergabegeräts,

Fig. 2 eine schrägperspektivische Teilansicht des Teils des Tonwiedergabegeräts, in dem die Anschlagkurvenscheibe mit dem Einstellteil untergebracht ist, wobei sich diese in einer inaktiven Außenstellung befindet, und

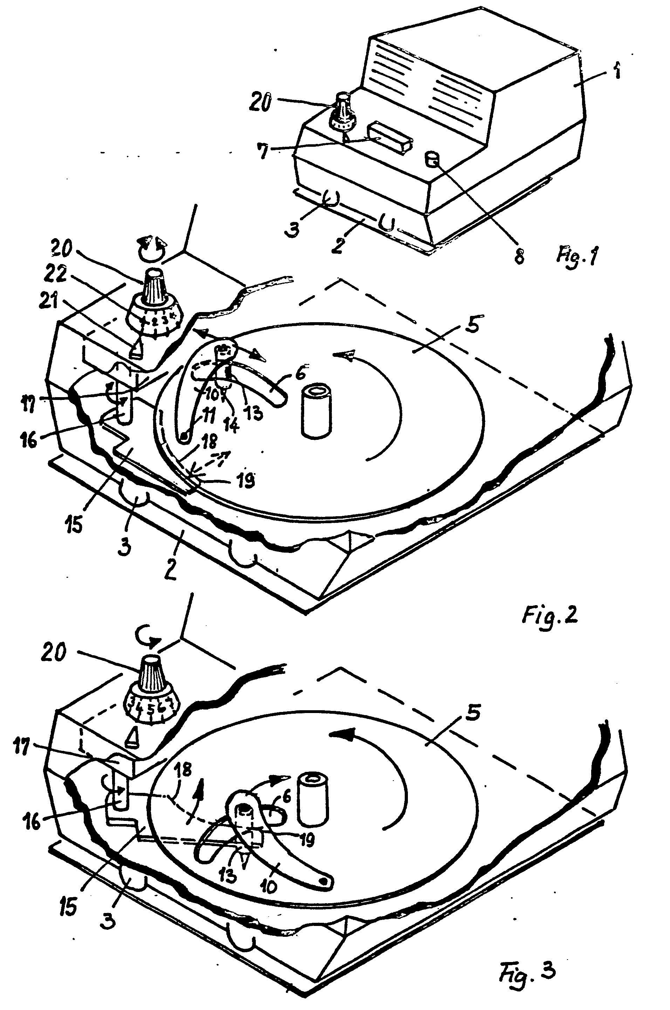

Fig. 3 eine Fig. 2 ähnliche schrägperspektivische Ansicht, bei der jedoch die Anschlagkurvenscheibe mit dem Tonabnehmersystem in Eingriff gekommen ist. Bei dem in Fig. 1 dargestellten Tonwiedergabegerät 1, das auf einen Tonträger 2 aufgesetzt ist, kann es sich um ein solches handeln, wie es beispielsweise in der DE-PS-24 30 377 beschrieben ist. Am vorderen Ende hat das Gehäuse zwei Füße 3 als Justiermittel zum lagegerechten Aufsetzen auf den Tonträger 2, der entsprechende Justierlöcher hat. Innerhalb des Gehäuses befindet sich ein batteriegetriebener Tonarmteller 5, sh. Fig. 2 und 3, der Antrieb dafür, sowie ein Verstärker mit Lautsprecher für die Tonwiedergabe. Oberhalb der Justierfüße 3 befindet sich im Gehäuse eine Einschalttaste 7 und rechts von ihr eine Stoßtaste 8.

Auf der Oberseite des Tonarmtellers 5 ist im äußeren Bereich ein Tonarm 10 in einem Lager 11 radial und vertikal schwenkbar gelagert. An seinem vorderen Ende nimmt er ein durch einen bogenförmigen Schlitz 6 des Tonarmtellers ragendes Tonabnehmersystem 13 auf, von dessen Unterseite eine Abtastnadel 14 vorsteht, die mit einer nicht dargestellten spiralförmigen Tonrille des Tonträgers 2 in Eingriff kommt. Der Tonarmteller 5 dreht um eine vertikale Drehachse.

Um das Tonabnehmersystem 13 bzw. den Tonarm 10 zu Beginn eines Abspielvorgangs radial nach innen auf eine gewünschte Stelle der Tonrille zu drängen, ist im Gehäuse des Tonwiedergabegeräts unterhalb des Tonarmtellers 5 eine Anschlagkurvenscheibe 15 schwenkbar mittels einer Achse 16 unterstützt, welche aus einem Untersetzungsgetriebe 17 nach unten vorsteht, welches unterhalb der oberen Gehäuseseite befestigt ist. Die Drehung der Schwenkachse 16 erfolgt mittels eines auf der Oberseite vorstehenden Einstellknopfs 20, der in mehrere Winkelstellungen drehbar ist, welche durch eine nicht näher dargestellte Rastscheibe bestimmt sind, um sie reproduzierbar zu erreichen. Auf der Gehäuseoberseite ist noch eine Marke 21 vorgesehen, die auf entsprechende Markierungen 22 am Einstellknopf 20 weisen kann. Durch Drehung des Einstellknopfs 20 wird die Anschlagkurvenscheibe 15 aus der in Fig. 2 dargestellten Ausgangslage in eine in Fig. 3 dargestellte Wirklage gebracht. Je weiter der Einstellknopf 20 gedreht wird, desto weiter wird auch die Anschlagkurvenscheibe in den Bewegungsbereich der Tonabnahmeeinrichtung aus Tonarm 10 und Tonabnehmersystem 13 gebracht.

Die Anschlagkurvenscheibe ist flach ausgebildet und hat eine der Drehachse des Tonarmtellers 5 zugewandte bogenförmige innere Anschlagkante 18, mit welcher das Tonabnehmersystem 13 unmittelbar erfaßt wird. Wie Fig. 3 entnehmbar ist, läuft das Tonabnehmersystem 13 entlang der Anschlagkante 18 nach außen bis zum Erreichen deren Spitze 19. An dieser Spitze 19 läuft das Tonabnehmersystem 13 von der Anschlagkurvenscheibe ab und kann nun frei die Tonrille abtasten. Nach einem Umlauf des Tonarmtellers ist das Tonabnehmersystem 13 durch die Tonrille soweit nach innen geführt worden, daß nunmehr keine Berührung mehr mit der Anschlagkurvenscheibe zustandekommt. Das Tonabnehmersystem tastet nun die Tonrille bis zur inneren Auslaufrille ab.

Die Ausbildung des Verstellmechanismusses für die Anschlagkurvenscheibe 15 kann auch derart sein, daß diese linear oder entlang einer Kurve verschoben wird, um in den Bewegungsbereich der Tonabnahmeeinrichtung zu gelangen. Es ist auch möglich, daß die Anschlagkurvenscheibe 15 oberhalb des Tonarmtellers 5 angeordnet ist und mit einem auf dem Tonarm 10 vorgesehenen Anschlag in Eingriff kommt.

Mit diesem Tonwiedergabegerät ist es möglich, einzelne Tonsegmente oder Tonbereiche des Tonträgers wiederzugeben, ohne die vorausgehenden Tonbereiche mitanhören zu müssen.

Ist das erwünschte Tonsegment abgehört worden, kann das Gerät sogleich abgeschaltet werden, so daß auch die dem gewünschten Tonsegment folgenden Tonbereiche nicht abgehört werden müssen.

Am Rand des Tonträgers könnte man durch Einprägen von zwei, drei oder mehreren Zahlen angeben, wie die Tonrille unterteilt ist, damit bei der Wiedergabe auch immer an der richtigen Stelle mit der Tonabnahme begonnen werden kann. Zweckmäßig ist es, wenn diese Zahlen auch im Text des Druckwerkes, dem der Tonträger zugeordnet ist, und zwar jeweils am Beginn des entsprechenden Absatzes, angebracht werden. Es ist möglich, einen Tonträger mit 4 min Spielzeit in ca. 10 Tonbereiche zu unterteilen, wobei es unerheblich ist, ob ein Tonbereich 40 sec und der nächste 120 sec lang ist.

**Patentansprüche**

1. Elektrisch betriebenes Tonwiedergabegerät (1) für ruhende platten- oder blattförmige Tonträger (2) mit einer spiralförmigen Tonrille sowie Justiermitteln (3) zum lagegerechten Aufsetzen des Tonwiedergabegeräts, auf dessen um eine senkrechte Achse umlaufenden, von einem batteriegespeisten Antriebsmotor antreibbaren Tonarmteller (5) eine horizontal und vertikal schwenkbar gelagerte Tonabnahmeeinrichtung (Tonarm 10 mit Tonabnehmersystem 13) mit dem Einschalten des Geräts (1) mittels einer Absenkeinrichtung aus einer eingezogenen Lage heraus auf den Tonträger (2) aufgesetzt wird, wobei die Tonabnahmeeinrichtung zur selbsttätigen Rückführung der Tonabnahmeeinrichtung in die Ausgangsstellung gegen eine Anschlagkurvenscheibe (15) anläuft und zur Spitze der Anschlagkurvenscheibe gedrängt wird, _dadurch gekennzeichnet_, daß, um die Wiedergabe an einer bestimmten Stelle zu beginnen, die Anschlagkurvenscheibe (15) in den Bewegungsbereich der Tonabnahmeeinrichtung (10, 13) schwenkbar und mittels eines von einer Außenseite des Gehäuses des Tonwiedergabegeräts (1) verstellbaren Einstellteils (20) in verschiedene radiale Stellungen, bezogen auf die Tonarmtellerachse, derart bringbar ist, daß nach Anlaufen der umlaufenden Tonabnahmeeinrichtung gegen die Anschlagkurvenscheibe (15) diese nach innen zu ihrer Spitze (19) gedrängt wird, über die sie dann bei Erreichen der gewünschten Stelle der Tonrille hinweggleitet.

2. Tonwiedergabegerät nach Anspruch 1, _dadurch gekennzeichnet_, daß zwischen Einstellteil (20) und schwenkbarer Anschlagkurvenscheibe (15) ein Untersetzungsgetriebe (17) vorgesehen ist.

3. Tonwiedergabegerät nach Anspruch 1 oder 2, _dadurch gekennzeichnet_, daß das Einstellteil (20) als Drehknopf ausgebildet ist.

4. Tonwiedergabegerät nach einem der Ansprüche 1 bis 3, _dadurch gekennzeichnet_, daß die Anschlagkurvenscheibe (15) in den Bewegungsbereich des Tonabnehmersystems (13) schwenkbar ist und dieses unmittelbar zur Anlage mit der Anschlagkurvenscheibe (15) kommt.

5. Tonwiedergabegerät nach einem der Ansprüche 1 bis 3, _dadurch gekennzeichnet_, daß die Anschlagkurvenscheibe (15) in den Bewegungsbereich eines Anschlags des Tonarms (10) schwenkbar ist und dieser unmittelbar zur Anlage mit der Anschlagkurvenscheibe (15) kommt.

6. Tonwiedergabegerät nach Anspruch 4 oder 5, _dadurch gekennzeichnet_, daß die Anschlagkante (18) der Anschlagkurvenscheibe (15) nach oben abgeschrägt ist und das Tonabnehmersystem (13) oder der Anschlag des Tonarms (10) an der Schrägfläche zum Abheben der Tonabnahmeeinrichtung vom Tonträger (2) hochläuft.

7. Tonwiederabegerät nach einem der Ansprüche 1 bis 6, _dadurch gekennzeichnet_, daß das Einstellteil (20) oder das Untersetzungsgetriebe (17) mit einer Rasteinrichtung, insbes. Rastscheibe, zusammenwirkt, die reproduzierbar Winkelstellungen der Anschklagkurvensheibe (15) bestimmt.

**Claims**

1. An electrically driven audio playback device (1) for stationary audio carriers (2) in the shape of a disc or sheet formed with a spiral-shaped sound groove, as well as with aligning means (3) for putting the audio playback device into place in correct positional relationship, said device including a tone arm table (5) which is rotating about a vertical axis and is operable by a battery-backed driving motor and on which a pickup (tone arm 10 with pickup system 13), supported to swivel in horizontal and vertical directions, is put on the audio carrier (2) by means of a lowering device, out of a withdrawn position, when switching on the device (1), said pickup, in order to automatically return it to the initial position, moving into engagement with an abutment cam (15) and being urged towards the tip of the abutment cam, characterized in that said abutment cam (15), in order to start playback in a specified position, is capable of being swivelled into the area of movement of the pickup (10, 13) and of being moved into different radial positions, with respect to the tone arm table axis, by means of a setting member (20) which is adjustable from an outer surface of the housing of the audio playback device (1), such that upon engagement of said revolving pickup with abutment cam (15), it will be urged inwardly towards the tip (19) thereof over which it will then slidingly pass when reaching the desired portion of said sound groove.

2. The audio playback device of claim 1, characterized in that a reduction gear unit (17) is provided between setting member (20) and swivelling abutment cam (15).

3. The audio playback device of claim 1 or 2, characterized in that the setting member (20) is formed as a turning knob.

4. The audio playback device according to any of claims 1 to 3, characterized in that said abutment cam (15) is capable of being swivelled into the area of movement of pickup system (13), and in that the latter engages with abutment cam (15) directly.

5. The audio playback device according to any of claims 1 to 3, characterized in that said abutment cam (15) is capable of being swivelled into the area of movement of a stop member of the tone arm (10), and in that said stop member engages with abutment cam (15) directly.

6. The audio playback device of claim 4 or 5, characterized in that the engaging edge (18) of abutment cam (15) has an upwardly facing chamfer, and in that said pickup system (13) or said stop member of tone arm (10) climbs said inclined surface so as to lift the pickup off said audio carrier (2).

7. The audio playback device according to any of claims 1 to 6, characterized in that said setting member (20) or said reduction gear unit (17) cooperates with a catch, especially a notched disc, which defines reproducible angular positions of abutment cam (15).

## Revendications

1. Lecteur audio (1), à commande électrique, pour supports sonores (2) stationnaires en forme de disque ou de feuille et présentant un sillon en spirale, ainsi qu'avec des moyens d'ajustage (3) destinés à assurer la mise en place du lecteur audio avec concordance des positions, ledit lecteur comportant un plateau (5) à bras de pick-up qui tourne autour d'un axe vertical et est apte à être commandé par un moteur d'entraînement, alimenté à partir d'une batterie, et sur lequel un pick-up (bras de pick-up 10 et système de pick-up 13), monté à pivotement horizontal et à basculement vertical, est mis en place sur le suppport sonore (2) à l'aide d'un dispositif de mise en place, à partir d'une position retirée, au moment de la mise sous tension du lecteur (1), ledit pick-up, en vue de son retour automatique à la position initiale, se déplaçant pour s'appuyer contre une came d'about (15) et étant poussé vers la pointe de la came d'about, caractérisé en ce que, en vue de faire commencer la lecture à un point déterminé, la came d'about (15) est apte à être pivotée pour entrer dans la zone de mouvement du pick-up (10, 13) et à être mis dans diverses positions radiales, par rapport à l'axe du plateau à bras de pick-up, à l'aide d'un organe de réglage (20) opérable à partir d'une surface extérieure du boîtier du lecteur audio (1), de manière que, après avoir pris appui contre la came d'about (15), le pick-up tournant est poussé vers sa pointe (19) qu'il passera en glissant par-dessus dès qu'il aura atteint la position désirée dans le sillon.

2. Le lecteur audio selon la revendication 1, caractérisé en ce qu'on a prévu un mécanisme de réduction (17) entre l'organe de réglage (20) et la came d'about (15) pivotable.

3. Le lecteur audio selon la revendication 1 ou 2, caractérisé en ce que l'organe de réglage (20) est réalisé sous forme d'un bouton tournant.

4. Le lecteur audio selon l'une quelconque des revendications 1 à 3, caractérisé en ce que l'organe de réglage (15) est apte à être pivotée pour entrer dans la zone de mouvement du système de pick-up (13), et en ce que ce dernier prend appui directement contre la came d'about (15).

5. Le lecteur audio selon l'une quelconque des revendications 1 à 3, caractérisé en ce que la came d'about (15) est apte à être pivotée pour entrer dans la zone de mouvement d'une butée du bras de pick-up (10), et en ce que cette dernière prend appui directement contre la came d'about (15).

6. Le lecteur audio selon la revendication 4 ou 5, caractérisé en ce que le bord d'about (18) de la came d'about (15) comporte un chanfrein tourné vers le haut, et en ce que le système de pick-up (13) ou la butée du bras de pick-up (10) monte la surface inclinée pour décoller le pick-up du support sonore (2).

7. Le lecteur audio selon l'une quelconque des revendications 1 à 6, caractérisé en ce que l'organe de réglage (20) ou le mécanisme de réduction (17) coopère avec un blocage, plus particulièrement avec un disque à encoches, qui définit des positions angulaires reproductibles de la came d'about (15).

Fig.1

Fig.2

Fig. 3